**Europäisches Patentamt**

**European Patent Office**

**Office européen des brevets**

(19)

(11) Veröffentlichungsnummer : **0 433 324 B1**

(12) # EUROPÄISCHE PATENTSCHRIFT

(45) Veröffentlichungstag der Patentschrift :
**20.05.92 Patentblatt 92/21**

(51) Int. Cl.$^5$ : **B01D 53/04, C01B 21/04**

(21) Anmeldenummer : **89909760.4**

(22) Anmeldetag : **08.09.89**

(86) Internationale Anmeldenummer :
**PCT/EP89/01046**

(87) Internationale Veröffentlichungsnummer :
**WO 90/02599 22.03.90 Gazette 90/07**

(54) **VERFAHREN ZUR GEWINNUNG VON STICKSTOFF AUS SAUERSTOFF UND STICKSTOFF ENTHALTENDEN GASGEMISCHEN MITTELS DRUCKWECHSELADSORPTIONAN KOHLENSTOFF-MOLEKULARSIEBEN.**

(30) Priorität : **08.09.88 DE 3830506**

(43) Veröffentlichungstag der Anmeldung :
**26.06.91 Patentblatt 91/26**

(45) Bekanntmachung des Hinweises auf die
Patenterteilung :
**20.05.92 Patentblatt 92/21**

(84) Benannte Vertragsstaaten :
**BE DE FR GB IT NL**

(56) Entgegenhaltungen :
**EP-A- 0 121 042**
**EP-A- 0 132 756**
**US-A- 4 761 165**

(73) Patentinhaber : **Bergwerksverband GmbH**
**Franz-Fischer-Weg 61**
**W-4300 Essen 13 (DE)**

(72) Erfinder : **SCHRÖTER, Hans, Jürgen**
**Düsterweg 14A**
**W-4330 Mülheim/Ruhr (DE)**
Erfinder : **HEIMBACH, Heinrich**
**Zahnrad 38**
**W-4300 Essen (DE)**
Erfinder : **TARNOW, Ferdinand**
**Im Ährenfeld 41**
**W-4100 Duisburg 25 (DE)**

EP 0 433 324 B1

## Beschreibung

Die Erfindung befrifft ein Verfahren zur Gewinnung von Stickstoff aus Sauerstoff und Sticksfoff enthaltenden Gasgemischen mittels Druckwechseladsorption an Kohlenstoff-Molekularsieben das einen Adsorptionszyklus, bestehend aus einem Druckaufbauschritt und einem Adsorptionsschritt, und einen Desorptionszyklus umfaßf, wobei der Sauerstoff während des Adsorptionszyklusses am Kohlenstoff-Molekularsieb adsorbiert und der Stickstoff während des Adsorptionsschrittes aus dem unter Druck stehenden Gasgemisch als Produktgas gewonnen wird sowie während des Desorptionszyklusses der Sauerstoff - gegebenenfalls nach Durchführung eines Druckausgleichsschrittes bei Zweiadsorberbetrieb - durch Druckentspannung vom Kohlenstoff-Molekularsieb desorbiert und in die Atmosphäre abgegeben wird.

Derartige Druckwechseladsorptionsverfahren zur Gewinnung von Stickstoff sind allgemeiner Stand der Technik.

Sie werden in Druckuwechseladsorptionsanlagen angewendet, die mindestens einen Adsorber enthalten, der mit Kohlenstoff-Molekularsieb gefüllt ist und in dem abwechselnd der Adsorptions-und der Desorptionszyklus ablaufen.

In Druckwechselanlagen zur Zerlegung von Luft in Sticktoff und Sauerstoff, die mit zeolithischen Molekularsieben arbeiten, wird aufgrund stärkerer Gleichgewichtsadsorptionskräfte bevorzugt der Sticksfoff an der inneren Oberfläche des Porensystems adsorbierf, so daß Sauersfoff in angereicherter Form während des Adsorptionsschrittes gewonnen wird.

Kohlenstoff-Molekularsiebe (CMS)) besitzen demgegenüber die Eigenschaft, daß im Gegensatz zu zeolithischen Molekularsieben der Sauerstoff innerhalb der Poren bevorzugt vor dem Stickstoff adsorbiert wird, so daß Stickstoff in angereicherter oder hochkonzantrierter Form als Produkt gewonnen werden kann. Der Trenneffekt basiert hier im Gegensatz zu den Zeolithen nicht auf einer Gleichgewichtseinstellung, sonsern auf den unterschiedlichen Diffusionsgeschwindigkeiten in den engen Poren des Kohlensfoff-Molekularsiebes. Während das mit 2.8 AE etwas kleinere Sauerstoffmolekül im Vergleich zu dem Stickstoffmolekül (ca. 3,0 AE) noch in die engen Poren des Kohlenstoff-Molekularsiebes eindringen kann, gelingt dies für das Größere Stickstoffmolekül nicht oder zumindest erst nach sehr langen Zeiten. So sind z. B. Diffusionsgeschwindigkeiten gemessen worden, nach denen eine Gleichgewichtseinstellung im Falle des Sticksfoff erst nach Stunden oder Tagen erreicht werden kann.

Entsprechend dem unterschiedlichen Trennmechanismus wendet man für den Einsatz von Kohlenstoff-Molekularsieben auch unterschiedliche Verfahrensbedingungen an. So wird der Stickstoff im Gegensatz zu den Zeolithen im Adsorptions- und nicht im Desorptionsschritt gewonnen. Außerdem muß man relativ kurze Adsorptionszeiten - z. B. eine bis zu zehn Minuten - einstellen, so daß zwar viel Sauerstoff adsorbiert wird, aber möglichst wenig Stickstoff. Die Adsorption erfolgt bei Drükken oberhalb 1 bar, vorzugsweise zwischen 5 und 12 bar, während zur Desorption in der Regel eine Druckentspannung in den Normaldruckbereich (1 bar) durchgeführt wird, bei bestimmten Anwendungsfällen auch bis in den Vakuumbereich hinein.

Zur Verfahrensoptimierung wird allgemein angestrebt, eine möglichst hohe Stickstoffmenge pro m³ CMS-Volumen und Stunde zu erzielen bei gleichzeitig möglichst geringem Luftbedarf pro m³ und Stunde. Für die Auslegung eines Druckwechselprozesses auf Kahlenstoff-Molekularsiebbasis ist somit nicht nur die gewonnene Stickstoffmenge, sondern auch des Verhältnis Luft zu Stickstoff zu beachten, denn eine möglichst hohe Stickstoffmenge führt nicht unbedingt auch zugleich zu einem niedrigen Luftbedarf. Es kann,insgesamt bei der Auslegung einer Druckwechselanlage zur Gewinnung einer vorgegebenen Stickstoffmenge wirtschaftlicher sein, ein Kohlenstoff-Molekularsieb einzusetzen, das pro m³ CMS-Volumen und Stunde eine geringere Stickstoffmenge erzeugt. Dies erfordert zwar eine größere CMS-Einfüllmenge und ein größeres Adsorbervolumen, d. h. einen höheren Investitionsaufwand für diese Anlage. Der höhere Investitionsaufwand kann aber durch niedrigere Energiekasten mehr als aufgewagen werden, wenn der spezifische Luftbedarf, der die Größe und die Leistung des Luftkompressors und damit vor allem die Energiekosten bestimmt, bei dem eingesetzten Kohlenstoffmalekularsieb gering gehalten werden kann. Im Einzelfall sind also zur Minimierung des Stickstoffgesfehungspreises die investitionsabhängigen Kosten und der Betriebsmittelverbrauch (im wesentlichen sind dies die Stromkasten) zu berücksichtigen, um den günstigsten Stickstoffgestehungspreis zu erhalfen.

Zur Optimierung der Druckwechselprazesse auf Kohlenstoffmolekularsieb-Basis wurde neben einer stetigen Verbesserung der Molekularsiebeigenschaften auch stets auf die Verbesserung der Verfahrenstechnik Wert gelegt. Meist wird die Vakuumdesorption mit der teureren Investition einer Vakuummaschine verworfen und stattdessen die Adsorption eher bei etwas höheren Drucken, z. B. bei 5 bis 12 bar, und die Desorption durch Entspannung auf 1 bar durchgeführt. Zur Erhöhung der Stickstoffausbeute und zur Verringerung des spezifischen Luftbedarfes wird bei Mehradsorberanlagen von den Möglichkeiten des Druckausgleiches zwischen gerade adsorbierendem und gerade desorbierendem Adsorber sowie von der Rückführung eines Teils des erzeugten Produktstickstoffes vor einem erneuten Adsorptionsschritt Gebrauch gemacht. Da das Rohgas, die Luft, in der Umgebung stets in hinreichender Menge zur Verfügung steht, ist es üblich, das Abgas - nämlich das Sauerstoffreichgas - während des Desorptionsschrittes in die Atmosphäre zurückzugeben. Mit heute bekannten Druckwechselverfahren zur Stickstoffgewinnung aus Luft lassen sich beispielsweise die in der nachfolgenden Tabelle zusammengestellten Stickstoffmengen und Luftbedarfszahlen sowie die daraus ermittelten Verhältniszahlen Luft zu Stickstoff erreichen, wobei die Sauerstoffrestkonzentrationen im Stickstoffproduktgas 0,5 bzw. 1,0 % $O_2$ betragen:

TABELLE 1

| Quelle | $N_2$-Reinheit | $N_2$-Menge | Luftbedarf | spezifischer Luftbedarf |
| --- | --- | --- | --- | --- |
| Verfahrensmerkmale | (% Rest $O_2$) | N | L | L/N |
| EP 00 85 155 8 bar/1 bar 2 x 340 kg CMS mit 680 kg/m$^3$ | 0,5 % | 54 $\frac{Nm^3}{h}$ | 215 $\frac{Nm^3}{h}$ | 3,9 |
| DPS 27 02 784 8 bar/1 bar 2 x 700 g CMS mit 680 g/ltr. | 1,0 % | 136 Nl/h | 490 Nl/h | 3,6 |
| Werbeprospekt *) 6 bar/1 bar | 1,0 % | 80 $\frac{Nm^3}{h}$ | 390,1 $\frac{Nm^3}{h}$ | 4,8 |

*) über ein CMS-Produkt der Fa. Kuraray, Japan

EP 0 433 324 B1

Die Erfindung geht aus von einem Verfahren der eingangs genannfen Gattung.

Der Erfindung liegt die Aufgabe zugrunde, eine weitere erhebliche Erhöhung der pro m³ Kohlenstoff-Molekularsieb-Volumen produzierten Stickstoffmenge und/oder eine Verminderung des spezifischen Luftbedarfes zu erreichen.

Diese Aufgabe wird durch die kennzeichnenden Merkmale des Anspruches 1 gelöst.

Eine Weiterbildung ist in Anspruch 2 niedergelegt.

Es hat sich nämlich überraschenderweise gezeigt, daß die pro CMS-Volumen erzielte Stickstoffmenge erhöht und/oder der spezifische Luftbedarf verringert werden, wenn die Entspannungsleitung des Adsorbers, dessen übrige Gaszu- und -abführungsleitungen sämtlich dicht geschlossen sind, nicht während des gesamten Zeitraumes des Desorptionsschrittes gegenüber der Atmosphäre geöffnet bleibt, sondern wenn diese Desorption in die Atmosphäre durch entsprechendes Schließen des Auslaßventils in der Entspannungsleitung auf Werte zwischen 80 % und 20 % der Desorptionszyklenzeit verkürzt und anschließend ein entsprechender Ruhezeitraum vorgesehen wird, der zwischen 20 % und 80 % der Desorptionszyklenzeit beträgt, währenddessen das Auslaßventil vollständig verschlossen bleibt. Dieser Vorteil ergibt sich auch dann, wenn bei Zwei-Adsorber-Anlagen in üblicher Weise ein Druckausgleichsschrift zu Beginn des Desorptionsschriftes erfolgt. Während dieses Zeitraumes ist das Gesamtsystem der Zwei-Adsorber-Anlage zur Atmosphäre hin abgeschlossen, jedoch eine Verbindungsleitung zwischen den beiden Adsorbern geöffnet, die jedoch zu Beginn des (eigentlichen) Desorptionsschrittes wieder geschlossen wird und geschlossen bleibt.

Nach dem erfindungsgemäßen Verfahren werden demzufolge ein oder zwei mit Kohlenstoff-Molekularsieb gefüllte Adsorber wie folgt betrieben:

Desorptionszyklus

1. Verkürzte Druckentspannung in die Atmosphäre, die zwischen 80 % und 20 %, vorzugsweise zwischen 65 % und 35 %, des Desorptionszyklusses beträgt, wobei bei Zwei-Adsorber-Anlagen ein Druckausgleich zwischen den beiden Adsorbern eingeschlossen ist, der zu Beginn des Entspannungsvorganges erfolgt;
2. Ruhezeit zwischen 20 % und 80 %, vorzugsweise zwischen 35 % und 65 %, des Desorptionszyklusses bei gegenüber der Atmosphäre abgeschlossenem Adsorber;

Adsorptionszyklus

3. Teilweiser Druckaufbau mit einem Teil des gewonnenen Stickstoffproduktgases, wobei bei Zwei-Adsorber-Anlagen ein Druckausgleich eingeschlossen ist, der zu Beginn des Druckaufbaus erfolgt; und schließlich
4. weiterer Druckaufbau mit Luft sowie anschließende erneute Produktion von Stickstoff.

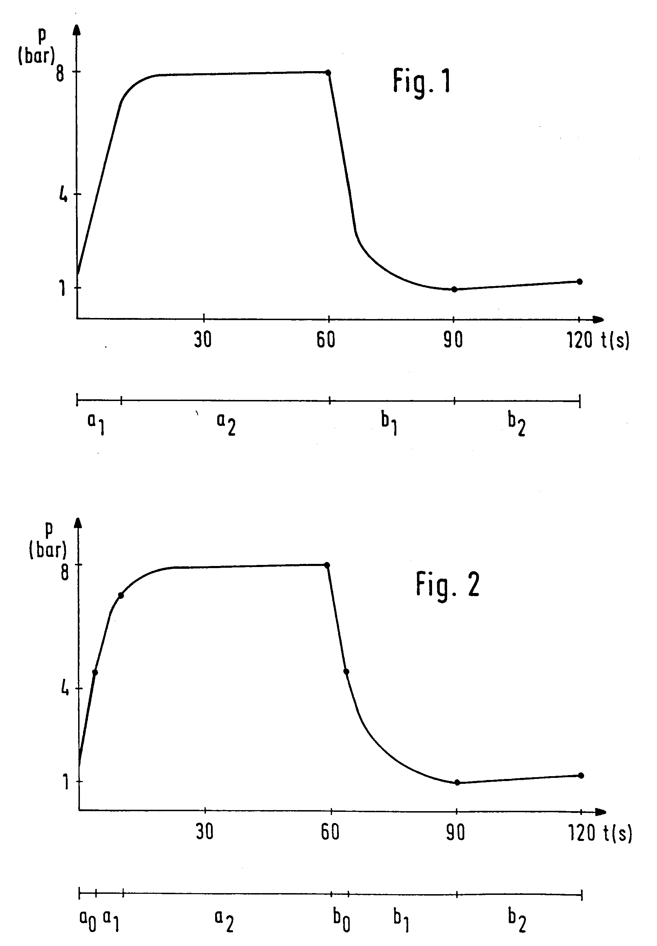

In der Zeichnung, Figuren 1 und 2, sind die Abläufe von Adsorptions- und Desorptionszyklen beispielhaft dargestellt.

Figur 1 zeigt anhand eines Druck/Zeit-Diagrammes den Zyklenverlauf bei einer Ein-Adsorber-Anlage und Figur 2 den Zyklenverlauf bei einer Zwei-Adsorber-Anlage.

Im Zeitraum a1 erfolgt im Beispiel der Figur 1 (Ein-AdsorberBetrieb) ein teilweiser Druckaufbau mit Produktgas, woran sich im Zeitraum a2 der weitere Druckaufbau mit Luft und die Produktgasgewinnung anschließen. Dann folgt der Desorptionszyklus mit dem Desorptionsschritt b1, der im Beispiel die Hälfte des Desorptionszyklusses umfaßt. Daran schließt sich der erfindungsgemäße Ruhezeitraum b2 an. Während dieses Zeitraumes b2 ist der Adsorber vollständig von der Atmosphäre abgeschlossen. Während des Ruhezeitraumes b2 desorbiert ein Teil der adsorbierten Gase, so daß ein leichter Druckanstieg im Adsorber erfolgt.

Bei Zwei-Adsorber-Betrieb gemäß dem Beispiel in Figur 2 ist als zusätzlicher Teilschritt am Anfang des Adsorptionszyklusses ein teilweiser Druckaufbau durch Druckausgleich, Schritt a0, vorgesehen, dem ein Teilentspannungsschritt b0 zu Beginn des Desorptionszyklusses entspricht.

Wie aus den Diagrammen hervorgeht, wird der erfindungsgemäße Ruhezeitraum durch die andere Verfahrenführung in Figur 2 gegenüber Figur 1 nicht beeinflußt.

Die nachfolgenden Ausführungsbeispiele erläutern das erfindungsgemäße Verfahren näher:

Die Versuche wurden in einer Druckwechselanlage durchgeführt, bestehend aus 2 x 4 Liter-Adsorbern mit entsprechenden Gas-zu- und -ableitungen, Verbindungsleitungen zwischen den Adsorbern, automatisch schaltenden Ventilen, einer Gasuhr und einem $O_2$-Analysegerät. Mit Hilfe einer Steuereinheit konnten unterschiedliche Zykluszeiten eingestellt werden.

Für die Versuche wurden mehrere Kohlenstoff-Molekularsiebe der Anmelderin mit unterschiedlichen Porensystemen und somit unterschiedlichen Trenneffekten bezüglich Stickstoff und Sauerstoff verwendet. Kohlenstoff-Molekularsiebe besitzen bekanntlich besonders viele Mikroporen im Bereich von 10 bis 5 AE und darunter.

Da die früher üblichen Porenstrukturuntersuchungen, wie z. B. Methanol- und Benzolisothermen, in diesem Porenradienbereich nicht genügend aussagekräftig sind, werden solche Adsorptionsmittel zutreffender durch die sogenannte Adsorptionskinetik, nämlich die Geschwindigkeitswerte der Stickstoff- und der Sauerstoffreingasadsorption charakterisiert. Bei der Aufnahme der Sauerstoff- bzw. Stickstoffadsorptionsisothermen stellt man fest, daß Sauerstoff wesentlich schneller als Stickstoff vom Porensystem aufgenommen wird.

Im Hinblick auf die praktische Anwendung, nämlich die Auslegung von Druckwechsel-Adsorptionsanlagen, ist es zweckmäßig, den $O_2/N_2$-Trenneffekt anhand eines Adsorptions-/Desorptionszyklusses in einem mit dem zu charakterisierenden Kohlenstoff-Molekularsieb gefüllten Adsorber (Testverfahren) nachzuweisen: Oer zuvor auf mindestens 50 Torr evakuierte Molekularsiebadsorber (Inhalt 200 ml) nimmt bei einem Druck von 1 bar innerhalb einer Minute ein bestimmtes Gasvolumen auf. Das danach durch Evakuierung bis auf 50 Torr innerhalb einer Minute gewonnene Gas hat eine erhöhte mittlere Sauerstoffkanzentration, die bei zur Lufttrennung geeigneten Kahlenstoff-Molekularsieben oberhalb von 35 Volumen-% liegen sollte.

Die Kohlenstoff-Molekularsiebe der Anmelderin besitzen die nach dieser Testmethode beschriebene Eigenschaft, wonach Luft aufgrund unterschiedlicher Diffusiansgeschwindigkeiten und nicht aufgrund unterschiedlicher Adsorptionsgleichgewichte in ihre Bestandteile Stickstoff und Sauerstoff aufgetrennt wird, wie die nachfolgende Tabelle 2 ausweist:

T A B E L L E   2

Eigenschaften der untersuchten Kohlenstoff-Molekularsiebe
(gemäß 1 min-Testverfahren)

| Probennummer | Sauerstoffkonzentration (Vol.-% $O_2$) |
|---|---|
| F 356/5/6 | 46,3 |
| P 41/3/4 | 47,0 |
| F 612/3 | 41,0 |
| KE 642F6 | 47,9 |
| 245/1 | 50,0 |

(Die Meßgenauigkeit beträgt < 0,5 % Abweichung)

Im folgenden wird anhand von Beispielen unter Anwendung der in der Tabelle 2 aufgeführten Kohlenstoff-Molekularsiebe der Anmelderin nachgewiesen, daß bei Durchführung des erfindungsgemäßen Verfahrens die angegebenen Varteile erreicht werden.

Mit den in Tabelle 2 charakterisierten Kahlenstoff-Molekularsieben wurden in der beschriebenen Druckwechselanlage, bestehend aus 2 x 4l-Adsorbern (Zwei-Adsorber-Konzept), Druckwechselversuche zur Gewinnung von Stickstoff aus Luft im direkten Vergleich mit und ohne verkürzte Druckentspannungszeit in die Atmosphäre durchgeführt. In einem Vergleichsversuch wurde Stickstoff nach dem Ein-Adsorber-Konzept, d. h. mit nur einem Adsorber, der dem Druckwechsel unterzogen wurde, gewonnen. Die in diesen Druckwechselanlagen gemäß der Erfindung durchgeführten Versuchen mit verkürzter Druckentspannung in die Atmosphäre und anschließender entsprechender Ruhezeit sind durch ein * gekennzeichnet. Die angegebene Gesamtzyklenzeit bezieht sich auf die beiden Schritte der Adsorption und der Desorption (= Entspannung). Den nachfolgenden Beispielen kann jeweils entnommen werden, auf welche Zeit die Entspannungszeit in den einzelnen Versuchen gemäß der Erfindung verkürzt wurde. Die Auswirkung der erfindungsgemäßen Maßnahmen wird anhand der produzierten Stickstoffmenge ($Nm^3/m^3CMS \cdot h$) und des Verhältnisses L/N zwischen dem Luftbedarf L und der erzeugten Stickstoffmenge N dargestellt.

BEISPIEL 1

Tabelle 3a enthält die Ergebnisse der Versuche mit dem Kohlenstoff-Molekularsieb Nr. 245/l. Hierbei wurde die Entspannungszeit von 120 sek. auf Werte zwischen 20 % (entsprechend 24 sek.) und 80 % (entsprechend 96 sek.) variiert. Man ersieht aus diesem Beispiel, daß sich bei CMS Nr. 245/l etwa bei 53 sek. (entsprechend 44 %) Entspannungszeit in die Atmosphäre (die übrige Zeit von 67 sek. bleibt der Adsorber im Ruhezustand geschlossen) der günstigste Wert für das Luft/Stickstoff-Verhältnis und damit für den spezifischen Energieverbrauch des Druckwechselprozeses ergibt. Bei 20 % des Entspannungszyklusses, ebenso wie bei 80 % des

EP 0 433 324 B1

Entspannungszyklusses ergeben sich weniger günstige Werte. Wie die Untersuchungen der Anmelderin gezeigt haben, liegen die günstigeren Entspannungszeifen im Bereich zwischen 35 und 65 % des Entspannungszyklusses. Die günstigsten Werte lassen sich im Einzelfall leicht durch entsprechende Versuche feststellen. Sie hängen von den üblichen Verfahrensparametern wie z. B. Druck, Sauerstoffkonzenfration im Produkt-Stickstoff und Gesamtzyklenzeit ab. Bei den Versuchen wurde 8 bar Adsorptionsdruck und 1 bar Desorptions(Entspannungs-)druck angewendet. Vor der Entspannung in die Atmosphäre wurde - wie bei Zwei-Behälter-Anlagen üblich, ein Druckausgleich zwischen den beiden Adsorbern durchgeführt, der max. eine Zeit von 1 sec in Anspruch nimmt, die gegenüber den angegebenen Gesamtzyklus- bzw. Entspannungszeiten vernachlässigt werden kann. In den Vergleichsversuchen wurden - abgesehen von der erfindungsgemäßen verfahrenstechnischen Änderung der Entspannungszeit - alle übrigen Parameter jeweils kanstant gehalten.

BEISPIEL 2

Tabelle 3b zeigt Ergebnisse aus einem Versuchsbetrieb mit einer Ein-Adsorber-Anlage. Dabei wurde der Abgasstrom einmal während des gesamten Entspannungszyklusses von 240 sek. in die Atmosphäre geleitet, während im anderen Fall der Adsorber nach 120 sek. mit einem Ventil für den Rest des Entspannungszyklusses geschlossen gehalten wurde. Durch diese erfindungsgemäße Maßnahme konnte deutlich mehr Stickstoff gewonnen werden und das Luft/Stickstoff-Verhältnis deutlich verringert werden. Gleichzeitig fiel der gewonnene Stickstoff mit höherer Reinheit an. Bei der Gewinnung von Stickstoff mit der gleichen Reinheit von 75 vppm hätte sich dementsprechend die gewonnene Stickstoffmenge noch weiter erhäht und das Verhältnis L/N in vorteilhafter Weise nach weiter erniedrigt. In den nachfolgenden Vergleichsversuchen wurde dann jeweils der Rest-Sauerstoffgehalt im produzierten Sticksfoff konstant gehalten.

BEISPEL 3

Tabelle 4 zeigt die Versuchsergebnisse von drei unterschiedlichen Kahlenstiff-Molekularsieben, wobei eine Sauerstoffverunreinigung von 0,1 Vol.-% im Stickstoff vorgegeben wurde. Aus der Tabelle 4 sind höhere Stickstoffausbeuten und ein geringerer Luftbedarf bei einer Verkürzung der Entspannungsschriffzeif in die Atmosphäre zu entnehmen. Insbesondere nimmt das Verhältnis Luft zu Stickstoff ab. Beispielsweise wird bei Anwendung einer Gesamtzykluszeit von 2 x 60 sek. durch Verkürzung der Entspannungsschrittzeit in die Umgebung von 60 auf 27 Sek. der für die Gewinnung (der gleichen Stickstoffmenge benötigte Luftbedarf um rd. 30 % (nämlich von 8,91 auf 6,12) gesenkt. Etwas geringere Einsparungen werden mit einem anderen Kohlenstoff-Molekularsieb erzielt. Wieder etwas bessere Ergebnisse werden mit einem dritten Kohlenstoff-Molekularsieb bei Anwendung einer längeren Gesamtzykluszeit von 2 x 120 sek. erreicht.

BEISPIEL 4

Tabelle 5 zeigt für ein und dasselbe Kohlenstoff-Molekularsieb analoge Ergebnisse für unterschiedliche Prozentwerte der Sauerstoffverunreinigung im produzierten Stickstoff. Auch bei diesen Versuchen wurde die Entspannungsschrittzeit verkürzt, und zwar von 60 sek. auf 35 - 39 sek. Die restliche Zeit bis zum Erreichen der Gesamtzeit des Desorptionszyklusses von 60 sek. verblieb der zuvor entspannte Adsorber im geschlossenen Zustand. Man sieht aus diesen Beispielen, daß mit zunehmenden Reinheiten des produzierten Stickstoffs (entsprechend einem niedrigeren Rest-$O_2$-Gehalt) die erfindungsgemäße Maßnahme zu einer immer deutlicheren prazentualen Verringerung des Verhältnisses Luft zu Stickstoff führt.

BEISPIEL 5

In Tabelle 6 ist die Auswirkung der Maßnahmen nach dem erfindungsgemäßen Verfahren bei unterschiedlichen Gesamtzykluszeiten und bei jeweils etwa gleichbleibenden Entspannungsschrifttzeifen dargestellt. Dabei wurde die Entspannungsschrittzeit in die Umgebung auf 20 % bis 66,6 % der Gesamtzeit des Desorptionszyklusses verkürzt. Bei diesen Versuchen wurde auf zwei verschiedene Kohlensfoff-Molekularsiebe zurückgegriffen. In einem Fall wurde außerdem der Resf-$O_2$-Gehalt variiert.

BEISPIEL 6

Tabelle 7 zeigt weitere Ergebnisse von Versuchen mit unterschiedlichen Kohlenstoff-Molekularsieben, die jeweils nach dem herkämmlichen und nach dem erfindungsgemäßen Verfahren erzielt wurden. Die einzelnen Produkte reagieren auf die Verkürzung der Entspannungsschrittzeit unterschiedlich. Hieraus kann geschlossen werden, daß der Trenneffekt auf unterschiedlichen Diffusionsgeschuwindigkeiten beruht und daher zeitabhängig ist. Ein direkter Vergleich an dieser Stelle mit Beispiel 2 (Tabelle 3b) zeigt, daß es bei manchen KohlenstoffMolekularsieben zureckmäßig ist, relativ lange Gesamtzykluszeiten von bis zu mehr als 5 min. einzustellen, um durch die erfindungsgemäße Verkürzung der Enftpannungszeit die gewünschten Vorfeile zu erreichen.

BEISPIEL 7

Die Tabelle 8 stellt die Ergebnisse von Versuchen mit relativ hoher Stickstoffreinheit (0,05 Vol.-%) nach dem herkömmlichen und dem erfindungsgemäßen Verfahren (mit verkürzten Entspannungsschrittzeiten in die Atmosphäre) gegenüber. Der spezifische Luftbedarf, der zur Gewinnung der gleichen Stickstoffmenge erforderlich ist, wird durch die Maßnahme der vorliegenden Erfindung bei dem hier untersuchten KahlenstoffMalekularsieb um rd. 25 % (von 7,91 auf 5,95) verringert.

EP 0 433 324 B1

## T A B E L L E  3a

Druckwechselversuche in der 2 x 4 1-Adsorber-Anlage.

Adsorptionsdruck: 8 bar / Desorptionsdruck: 1 bar

(in allen Versuchen gleich)

CMS-Nr. 245/1

Rest-Sauerstoff im Produkt-Stickstoff: 0,1 Vol.-%

| Entspannungs-schrittzeit in die Umgebung (sek.) | Gesamtzyklus-zeit (sek.) | $N_2$-Produkt N $\dfrac{Nm^3}{m^3 CMS \cdot h}$ | Luftbedarf L $\dfrac{Nm^3}{m^3 CMS \cdot h}$ | Verhältnis Luft zu Stickstoff $\dfrac{L}{N}$ |
|---|---|---|---|---|
| 120 | 2 x 120 | 35,0 | 164,5 | 4,7 |
| 24* | 2 x 120 | 23,2 | 107,6 | 4,6 |
| 53* | 2 x 120 | 40,3 | 145,8 | 3,6 |
| 60* | 2 x 120 | 40,8 | 151,5 | 3,7 |
| 96* | 2 x 120 | 42,5 | 166,0 | 3,9 |

* gemäß der Erfindung

EP 0 433 324 B1

TABELLE 3b

Druckwechselversuche in einer Ein-Adsorber-Anlage.

(CMS-Volumen 8 ltr.)

Adsorptionsdruck: 8 bar / Desorptionsdruck: 1 bar

CMS-Nr. 245/1

| Entspannungs-schrittzeit i.d. Umgebung (sek.) | Gesamtzy-kluszeit (sek.) | $N_2$-Produkt N | | Luftbedarf L | Verhältnis Luft zu Stickstoff |
| | | $\frac{Nm^3}{m^3 CMS \cdot h}$ | Vppm $O_2$-Rest | $\frac{Nm^3}{m^3 CMS \cdot h}$ | $\frac{L}{N}$ |
|---|---|---|---|---|---|
| 240 | 2 x 240 | 7,93 | 75 | 98,9 | 12,5 |
| 120* | 2 x 240 | 8,76 | 34 | 88,7 | 10,1 |

* gemäß der Erfindung

## T A B E L L E  4

| CMSN | Rest-$O_2$ (%) | Entspannungs- schrittzeit (sec.) i. d. Umgebung | Gesamtzy- kluszeit (sec.) | $N_2$-Produkt N $\frac{Nm^3}{m^3 CMSN \cdot h}$ | Luftbedarf L $\frac{Nm^3}{m^3 CMSN \cdot h}$ | Verhältnis Luft zu Stickstoff $\frac{L}{N}$ |
|---|---|---|---|---|---|---|
| F356/5/6 | 0,1 | 120 | 2 x 120 | 23,9 | 153 | 6,39 |
| " | 0,1 | 52* | 2 x 120 | 28,2 | 138 | 4,90 |
| F612/3 | 0,1 | 60 | 2 x 60 | 33,3 | 297 | 8,91 |
| " | 0,1 | 35* | 2 x 60 | 38,3 | 260 | 6,79 |
| " | 0,1 | 27* | 2 x 60 | 41,2 | 252 | 6,12 |
| KE642 F6 | 0,1 | 60 | 2 x 60 | 54,9 | 278 | 5,06 |
| " | 0,1 | 39* | 2 x 60 | 57,5 | 260 | 4,51 |

* gemäß der Erfindung

EP 0 433 324 B1

EP 0 433 324 B1

## TABELLE 5

| CMSN | Rest-$O_2$ (%) | Entspannungs-schrittzeit (sec.) i. d. Umgebung | Gesamtzy-kluszeit (sec.) | $N_2$-Produkt N $\frac{Nm^3}{m^3 CMSN \cdot h}$ | Luftbedarf L $\frac{Nm^3}{m^3 CMSN \cdot h}$ | Verhältnis Luft zu Stickstoff $\frac{L}{N}$ |
|---|---|---|---|---|---|---|
| F 612/3 | 0,1 | 60 | 2 × 60 | 33,3 | 297 | 8,91 |
| " | 0,5 | 60 | 2 × 60 | 90 | 359 | 3,99 |
| " | 1,0 | 60 | 2 × 60 | 119 | 380 | 3,18 |
| " | 0,1 | 35* | 2 × 60 | 38,3 | 260 | 6,79 |
| " | 0,5 | 39* | 2 × 60 | 91,6 | 326 | 3,56 |
| " | 1,0 | 39* | 2 × 60 | 119,4 | 360 | 3,02 |

* gemäß der Erfindung

EP 0 433 324 B1

## TABELLE 6

| CMSN | Rest-$O_2$ (%) | Entspannungs-schrittzeit (sec.) i. d. Umgebung | Gesamtzy-kluszeit (sec.) | $N_2$-Produkt N $\frac{1}{m^3}\frac{Nm^3}{CMSN \cdot h}$ | Luftbedarf L $\frac{1}{m^3}\frac{Nm^3}{CMSN \cdot h}$ | Verhältnis Luft zu Stickstoff $\frac{L}{N}$ |
|---|---|---|---|---|---|---|
| P41/3/4 | 0,1 | 45 | 2 x 90 | 34,7 | 181 | 5,22 |
| " | 0,1 | 46* | 2 x 120 | 28,4 | 140 | 4,91 |
| F 612/3 | 0,1 | 39* | 2 x 60 | 49,3 | 250 | 5,07 |
| " | 0,1 | 27* | 2 x 60 | 41,2 | 252 | 6,12 |
| " | 0,1 | 24* | 2 x 120 | 21,9 | 131 | 5,96 |
| " | 0,5 | 39* | 2 x 60 | 91,6 | 326 | 3,56 |
| " | 0,5 | 32* | 2 x 120 | 47,7 | 168 | 3,53 |
| " | 1,0 | 39* | 2 x 60 | 119,4 | 360 | 3,02 |
| " | 1,0 | 41* | 2 x 120 | 60,1 | 188 | 3,12 |

* gemäß der Erfindung

EP 0 433 324 B1

## T A B E L L E  7

| CMSN | Rest-$O_2$ (%) | Entspannungs-schrittzeit (sec.) i. d. Umgebung | Gesamtzy-kluszeit (sec.) | $N_2$-Produkt N $\dfrac{Nm^3}{m^3 CMSN \cdot h}$ | Luftbedarf L $\dfrac{Nm^3}{m^3 CMSN \cdot h}$ | Verhältnis Luft zu Stickstoff $\dfrac{L}{N}$ |
|---|---|---|---|---|---|---|
| F356/5/6 | 0,1 | 60 | 2 × 60 | 42,1 | 243 | 5,76 |
| " | 0,1 | 45* | 2 × 60 | 42,9 | 230 | 5,36 |
| P 41/3/4 | 0,1 | 60 | 2 × 60 | 47,0 | 267 | 5,67 |
| " | 0,1 | 39* | 2 × 60 | 49,6 | 249 | 5,01 |
| F612/3 | 0,1 | 60 | 2 × 60 | 33,3 | 297 | 8,91 |
| | 0,1 | 27* | 2 × 60 | 41,2 | 252 | 6,12 |

* gemäß der Erfindung

TABELLE 8

| CMSN | Rest-$O_2$ (%) | Entspannungs-schrittzeit (sec.) i. d. Umgebung | Gesamtzy-kluszeit (sec.) | $N_2$-Produkt N $\frac{Nm^3}{m^3 CMSN \cdot h}$ | Luftbedarf L $\frac{Nm^3}{m^3 CMSN \cdot h}$ | Verhältnis Luft zu Stickstoff $\frac{L}{N}$ |
|---|---|---|---|---|---|---|
| F356/5/6 | 0,052 | 100 | 2 × 100 | 22,0 | 174 | 7,91 |
| " | 0,050 | 59* | 2 × 100 | 25,3 | 131 | 6,19 |
| " | 0,053 | 47* | 2 × 100 | 25,4 | 126 | 5,95 |

* gemäß der Erfindung

EP 0 433 324 B1

## Patentansprüche

1. Verfahren zur Gewinnung von Stickstoff aus Sauerstoff und Stickstoff enthaltenden Gasgemischen mittels Druckwechseladsorption an Kohlenstoff-Molekularsieben, das einen Adsorptionszyklus, bestehend aus einem Druckaufbauschritt und einem Adsorptionsschritt, und einen Desorptionszyklus umfaßt, wobei der Sauerstoff während des Adsorptionszyklusses am Kohlenstoff-Molekularsieb adsorbiert und der Stickstoff während des Adsorptionsschrittes aus dem unter Druck stehenden Gasgemisch als Produktgas gewonnen wird sowie während des Desorptionszyklusses der Sauerstoff - gegebenenfalls nach Durchführung eines Druckausgleichsschrittes bei Zweiadsorberbetrieb - durch Druckentspannung vom Kohlenstoff-Molekularsieb desorbiert und in die Atmosphäre abgegeben wird, dadurch gekennzeichnet, daß der Desorptionszyklus - der gegebenenfalls den Druckausgleichsschritt mit einem anderen Adsorber einschließt - einen Ruhezeitraum, der zwischen 20 und 80 % der Gesamtzeit des Desorptionszyklusses beträgt, neben einem entsprechend verkürzten Desorptionsschritt umfaßt, wobei die Entspannungsleitung des Adsorbers, dessen übrige Gaszu- und -abführungsleitungen sämtlich dicht geschlossen sind, zu Beginn des Desorptionsschrittes - gegebenenfalls nach erfolgtem Druckausgleichvollständig zur Atmosphäre hin geöffnet und nach der Entspannung bis auf Umgebungsdruck vollständig geschlossen wird und während des anschließenden Ruhezeitraumes dicht geschlossen bleibt.

2. Verfahren nach Anspruch 1, dadurch gekennzeichnet, daß der Ruhezeitraum zwischen 35 und 65 % der Gesamtzeit des Desorptionszyklusses beträgt.

## Claims

1. Process for recovering nitrogen from gas mixtures containing oxygen and nitrogen by alternating pressure adsorption on carbon molecular sieves, which includes an adsorption cycle comprising a pressurizing step and an adsorption step, and a desorption cycle, the oxygen being adsorbed during the adsorption cycle on the carbon molecular sieve, and the nitrogen being recovered during the adsorption step from the gas mixture under pressure as the product gas, and during the desorption cycle the oxygenwhere appropriate after carrying out a pressure equalization step in two-adsorber operation - being desorbed by pressure relief from the carbon molecular sieve and being emitted to the atmosphere, characterized in that the desorption cycle - which where appropriate includes the pressure equalization step with another adsorber - includes a rest time which is between 20 and 80% of the total time of the desorption cycle, in addition to a correspondingly shortened desorption step, the relief line of the adsorber, whereof all the other gas supply and removal lines are sealed, being completely opened to the atmosphere at the start of the desorption step - where appropriate after the pressure equalization is complete - and being completely closed after the relief to atmospheric pressure, and remaining sealed during the subsequent rest time.

2. Process according to Claim 1, characterized in that the rest time is between 35 and 65% of the total time of the desorption cycle.

## Revendications

1. Procédé de récupération d'azote hors de mélanges de gaz contenant de l'azote et de l'oxygène, à l'aide d'une adsorption à variation de pression sur tamis moléculaires de carbone, qui comprend un cycle d'adsorption, consistant en une étape d'élévation de pression et une étape d'adsorption, et un cycle de désorption, l'oxygène étant adsorbé sur le tamis moléculaire de carbone au cours du cycle d'adsorption et l'azote étant récupéré à titre de gaz produit hors du mélange de gaz se trouvant sous pression au cours de l'étape d'adsorption, tandis qu'au cours du cycle de désorption l'oxygène - éventuellement après exécution d'une étape d'équilibrage des pressions dans le cas d'un fonctionnement avec deux adsorbeurs - est désorbé hors du tamis moléculaire de carbone par détente de la pression et est envoyé dans l'atmosphère, caractérisé en ce que le cycle de désorption - qui le cas échéant suit l'étape d'équilibrage des pressions d'un autre adsorbeur - comprend à côté d'une étape de désorption raccourcie en conséquence une période de repos qui s'élève à entre 20 et 80 % de la totalité de la durée du cycle de désorption, tandis que la conduite de détente de l'adsorbeur, dont l'ensemble des autres conduites d'extraction et d'injection de gaz sont fermées de manière étanche, est complètement ouverte sur l'atmosphère dès le début de l'étape de désorption - le cas échéant après que l'équilibrage des pressions ait été terminé -, est complètement fermée après la détente jusqu'à la pression ambiante, et reste fermée de manière étanche au cours de la période de repos qui suit.

2. Procédé selon la revendication 1, **caractérisé en ce que** la durée de la période de repos s'élève à entre 35 et 65 % de la durée totale du cycle de désorption.

Fig. 1

Fig. 2